# FASCICULE DE BREVET EUROPEEN

(11) **EP 0 496 072 B1**
(45) Date de publication et mention de la délivrance du brevet: **14.02.1996**
(21) Numéro de dépôt: 91121312.2
(22) Date de dépôt: 12.12.1991
(51) Int. Cl.: G01D 5/34

(54) **Capteur optoélectronique de mesure de grandeurs linéaires**
Optoelektronischer Sensor zum Messen linearer Grössen
Opto-electronic sensor to measure linear entities

(30) Priorité: 22.01.1991 CH 173/91
(43) Date de publication de la demande: 29.07.1992
(73) Titulaire: TESA S.A., CH-1020 Renens (CH)
(72) Inventeur: Zufferey, Charles-Henri, CH-1001 Lausanne (CH)
(74) Mandataire: BOVARD AG - Patentanwälte

(56) Documents cités:
- WO-A-87/07944
- GB-A- 2 056 660
- US-A- 4 580 871

## Description

La présente invention a pour objet un capteur optoélectronique de mesure de grandeurs linéaires par réflexion de rayons lumineux comportant au moins une unité de captage disposée d'un côté et en regard d'une règle de mesure incrémentale à graduation réfléchissante et comprenant un photoémetteur optoélectronique arrangé pour irradier la graduation réfléchissante de la règle, un réticule gradué arrangé pour palper les rayons lumineux réfléchis par la graduation de la règle et un photorécepteur optoélectronique arrangé pour détecter les rayons lumineux réfléchis au travers du réticule.

Dans les capteurs connus de ce genre, le photoémetteur et le photorécepteur sont arrangés pour présenter leurs axes optiques convergents sur la graduation réfléchissante de la règle et symétriques par rapport à la normale de celle-ci, de sorte que la lumière émise par le photoémetteur est réfléchie directement dans la direction de l'axe optique du photorécepteur et reçue par celui-ci après passage au travers du réticule de palpage.

Pour satisfaire aux besoins toujours plus exigeants de la miniaturisation, notamment en ce qui concerne l'encombrement en largeur de l'unité de palpage, ou de chacune des unités de palpage utilisées dans le capteur lorsque celui-ci en comporte plusieurs dans le but d'optimiser le gain de transfert des signaux optiques, le choix des composants optoélectroniques les moins encombrants est prépondérant, avec cependant une limite inhérente à la disposition géométrique concourante des axes optiques du photoémetteur et du photorécepteur.

Le document WO-A-8707944 montre par ailleurs un capteur opto-électronique du type défini ci-dessus, dans lequel le photoémetteur et le photorécepteur sont arrangés l'un à côté de l'autre avec leurs axes optiques parallèles entre eux et perpendiculaires au plan de la règle devant une lentille permettant la focalisation et la déflexion des rayons lumineux en provenance du photoémetteur pour les récupérer sur le photorécepteur après leur réflexion sur la graduation de la règle et leur passage au travers du réticule. Cet agencement, qui parmet un gain de place appréciable, nécessite toutefois une notable précision dans la réalisation de la lentille et dans son positionnement en vue de sa fonction commune au photoémetteur et au photorécepteur.

L'invention a pour but d'étendre encore davantage le champ des possibilités de miniaturisation des capteurs du genre auquel elle se rapporte.

A cet effet, le capteur selon l'invention est conforme à la définition donnée par la revendication.

De la sorte, toutes choses étant considérées égales quant au choix du dimensionnement des composants optoélectroniques, la combinaison de l'arrangement géométrique du photoémetteur et du photorécepteur en positions parallèles de leurs axes optiques avec les moyens de focalisation et de redressement de rayons lumineux du groupe optique, permet de diminuer l'encombrement en largeur de l'unité de captage par rapport à l'arrangement connu dans lequel les axes optiques de ces deux composants sont obliques et concourants, et qui impose, de ce fait, un écart plus important entre eux.

Le dessin annexé représente, à titre d'exemple, une forme d'exécution de l'unité de captage qui caractérise l'objet de l'invention.

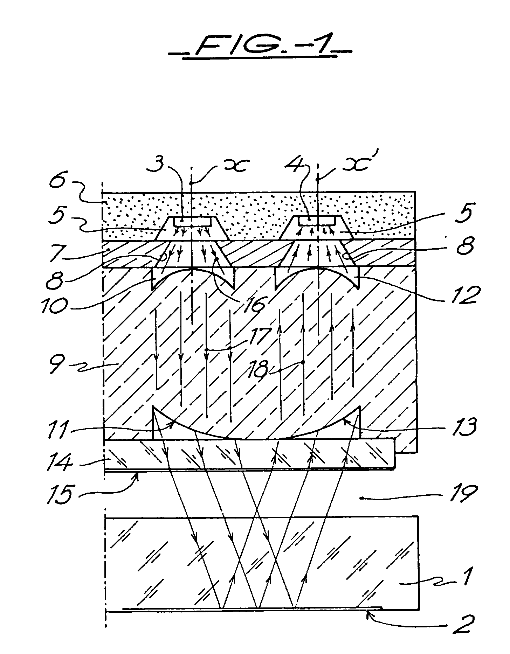

La figure 1 est une coupe verticale transversale de la première forme d'exécution.

L'unité de captage représentée figure 1 est montrée placée au-dessus et en regard d'une règle de mesure incrémentale 1 en matériau transparent, par exemple en verre, dont la face inférieure présente une graduation réfléchissante 2, constituée par exemple par un réseau de traits équidistants ressortant de la gravure d'une fine couche de chrome et distribués dans la direction du déplacement relatif de cette unité de captage par rapport à la règle qui est ici perpendiculaire au plan du dessin.

Cette unité de captage comprend, arrangés de haut en bas, les éléments suivants :
- un photoémetteur 3 et un photorécepteur 4 opto-électronique fixés en positions parallèles de leurs axes optiques x et x' dans deux alvéoles voisines 5 d'un circuit imprimé 6 destiné à leur liaison à un circuit d'alimentation et de traitement de leurs signaux, non représenté,
- une plaque de calibrage de faisceaux lumineux 7 présentant deux diaphragmes 8 placés l'un devant le photoémetteur 3 et l'autre devant le photorécepteur 4, centrés sur les axes optiques x et x' de ces deux éléments,
- un groupe optique 9 en matériau synthétique transparent, tel que par exemple celui connu sous le nom commercial de plexiglas, dont les deux faces opposées parallèles entre elles et parallèles au plan de la règle 1 présentent, alignés sur les deux axes optiques x et x' du photoémetteur 3 et du photorécepteur 4, deux équipages de focalisation et de déviation de rayons lumineux composés chacun d'une lentille de focalisation 10, respectivement 12, et d'une face de déflexion 11, respectivement 13,
- et un réticule gradué 14 en matériau transparent tel que par exemple du verre présentant un réseau de traits opaques équidistants 15 parallèles et de pas égal ou proportionnel à celui des traits de la graduation 2 de la règle 1, pour palper les rayons lumineux réfléchis par celle-ci.

Cet arrangement, dans lequel le circuit imprimé 6, les éléments optoélectroniques 3 et 4, le groupe optique 9 et le réticule 14 sont fixés entre eux, les lentilles de focalisation 10 et 12 et les faces de réflexion 11 et 13 sont intégrées au groupe optique 9 par moulage du matériau synthétique transparent qui le compose. Les éléments du groupe optique ont pour fonctions :
- de transformer le faisceau de rayons divergents 16 émis par le photoémetteur 3 en faisceau de rayons parallèles 17 centré sur l'axe optique x de celui-ci, par le moyen de la première lentille 10,
- de dévier le faisceau de rayons parallèles 17 en provenance du photoémetteur 3 pour le centrer sur la graduation réfléchissante 2 de la règle 1, par le moyen de la première face de déflexion 11,
- de dévier le faisceau de rayons parallèles réfléchis par la graduation réfléchissante 2 de la règle 1 et au travers du réticule 14 pour le diriger et le centrer sur l'axe optique x' du photorécepteur 4, par le moyen de la seconde face de déflexion 13,
- et de focaliser le faisceau de rayons parallèles 18 réfléchis au travers de la seconde face de déflexion 13 sur le photorécepteur 4, par le moyen de la seconde lentille de focalisation 12.

Une lame d'air 19 d'épaisseur prédéterminée dont dépend le pas du gravage de la règle 1 et du réticule 14, est ménagée, de manière habituelle, entre ces deux éléments.

Dans le but de satisfaire à une faible consommation d'énergie, les éléments optoélectroniques peuvent être choisis de préférence en technologie infrarouge, par exemple une photodiode IR pour le photoémetteur 3 et un phototransistor IR pour le photorécepteur 4, mais ce choix n'est évidemment pas limitatif.

Les diaphragmes de calibrage 8 placés devant les éléments optoélectroniques 3 et 4, sont ici utilisés dans le but d'augmenter le rendement optique mais ils ne sont pas indispensables.

Par ailleurs, la composition du groupe optique 9 n'est pas non plus limitative et d'autres arrangements peuvent être appliqués sans sortir du cadre de l'invention. Ainsi par exemple, des éléments optiques distincts et appropriés aux mêmes effets peuvent être montés dans un boîtier ou insérés dans un support.

En outre, les deux faces de déflexion 11 et 13 peuvent être constituées par deux faces obliques d'un prisme dont l'arête supérieure serait située dans un plan perpendiculaire au plan contenant les deux axes optiques x et x' et à mi-distance de ces deux axes, les deux lentilles 10 et 12 étant pour leur part à courbure inversée, convexe au lieu de concave, en regard de chacune de ces deux faces.

## Revendications

1. Capteur optoélectronique de mesure de grandeurs linéaires par réflexion de rayons lumineux, comportant au moins une unité de captage disposée d'un côté et en regard d'une règle de mesure incrémentale (1) à graduation réfléchissante (2) et comprenant un photoémetteur optoélectronique (3) arrangé pour irradier la graduation réfléchissante de la règle, un réticule gradué (14) arrangé pour palper les rayons lumineux réfléchis par la graduation de la règle, et un photorécepteur optoélectronique (4) arrangé pour détecter les rayons lumineux réfléchis au travers du réticule, le photoémetteur (3) et le photorécepteur (4) de l'unité de captage étant arrangés l'un à côté de l'autre avec leurs axes optiques (x,x') parallèles entre eux et perpendiculaires au plan de la règle devant un groupe optique (9) comprenant des moyens de focalisation et de déviation des rayons lumineux en provenance du photoémetteur pour les récupérer sur le photorécepteur après leur réflexion sur la graduation de la règle et leur passage au travers du réticule (14), caractérisé en ce que le groupe optique 9 de l'unité de captage comprend, alignés sur les deux axes optiques (x, x') du photoémetteur et du photorécepteur, deux équipages de focalisation et de déviation de rayons lumineux composés chacun d'une lentille de focalisation (10, 12) et d'une face de déflexion (11, 13) espacées entre lesquelles les rayons lumineux émis par le photoémetteur et ceux réfléchis par la graduation réfléchissante de la règle sont parallèles aux deux axes optiques précités (x, x').

## Patentansprüche

1. Optoelektronischer Sensor zum Messen linearer Grössen mittels Reflexion von Lichtstrahlen, welcher mindestens eine Aufnahmeeinheit aufweist, die auf einer Seite einer inkrementalen Messschiene (1) mit reflektierender Rasterung (2) der Messschiene zugewandt angeordnet ist und die eine optoelektronische Photoemissionsquelle (3) zum Bestrahlen der reflektierenden Rasterung der Messschiene, ein kalibriertes Raster (14) zum Abtasten der von der Rasterung der Messschiene reflektierten Lichtstrahlen und einen optoelektronischen Photoempfänger (4) zum Erfassen der durch das Raster hindurch reflektierten Lichtstrahlen aufweist, wobei die Photoemissionsquelle (3) und der Photoempfänger (4) der Aufnahmeeinheit nebeneinander mit parallel zueinander und rechtwinklig zur Ebene der Messschiene verlaufenden optischen Achsen (x, x') vor einer optischen Gruppe (9) angeordnet sind, welche Mittel zur Fokussierung und Ablenkung der von der Photoemissionsquelle ausgehenden Lichtstrahlen umfasst, um diese nach ihrer Reflexion auf der Rasterung der Messschiene und dem Durchlaufen der Rasterung (14) auf dem Photoempfänger zu sammeln, dadurch gekennzeichnet, dass die optische Gruppe (9) der Aufnahmeeinheit auf den beiden optischen Achsen (x, x') der Photoemissionsquelle und des Photoempfängers ausgerichtet zwei Vorrichtungen zur Fokussierung und Ablenkung der Lichtstrahlen umfasst, die sich jeweils zusammensetzen aus einer Fokussierungslinse (10, 12) und einer im Abstand dazu angeordneten Ablenkungsfläche (11, 13), zwischen denen die von der Photoemissionsquelle abgestrahlten und die von der reflektierenden Rasterung der Messschiene reflektierten Lichtstrahlen parallel zu den beiden genannten optischen Achsen (x, x') sind.

## Claims

1. An opto-electronic sensor for measuring linear values by reflection of light rays, comprising at least one sensor unit arranged on one side of and facing an incremental measurement scale (1) with reflecting graduation (2) and comprising an opto-electronic photoemitter (3) arranged to irradiate the reflecting graduation of the scale, a graduated graticule (14) arranged to sense the luminous rays reflected by the graduation of the scale, and an opto-electronic photoreceiver (4) arranged to detect the light rays reflected through the graticule, the photoemitter (3) and the photoreceiver (4) of the sensor unit being arranged alongside of each other with their optical axes (x, x') parallel to each other and perpendicular to the plane of the scale in front of an optical group (9) comprising means for focusing and deviating light rays coming from the photoemitter in order to recover them on the photoreceiver after their reflection on the graduation of the scale and their passage through the graticule (14) characterized in the the optical group 9 of the sensor unit comprises, aligned on the two optical axes (x, x') of the photoemitter and the photoreceiver, two light ray focusing and deviating assemblies each formed of a focusing lens (10, 12) and of a deflection face (11, 13) which are spaced apart from each other and between which the light rays emitted by the photoemitter and those reflected by the reflecting graduation of the scale are parallel to the said two optical axes (x,x').
